# EUROPEAN PATENT APPLICATION

(11) **EP 4 769 356 A1**
(43) Date of publication of application: **01.07.2026**
(21) Application number: 25222402.7
(22) Date of filing: 10.12.2025
(51) Int. Cl.: G07F 19/00, G07D 11/10, F16B 21/18, F16H 57/00

(54) **TAPERED GEAR OR PULLEY INTERFACE**

(30) Priority: 31.12.2024 US 202419006450
(71) Applicant: Cardtronics USA, Inc., Atlanta, GA 30308-1007 (US)
(72) Inventor: RAMAGE, Adam Stewart, Perth & Kinross PH10 6TZ (GB)
(74) Representative: Secerna LLP

(57) **Abstract**

A system, media conveyance device and automated teller machine (ATM) are disclosed. The system comprises: a metal shaft having at least one tapered surface; a gear having at least one complementary tapered surface on an internal bore, the at least one complementary tapered surface configured to interface with the at least one tapered surface of the metal shaft when the metal shaft is inserted into the internal bore; and a bowed retaining clip, which when engaged with a portion of the metal shaft, secures the gear to the metal shaft.

## Description

### BACKGROUND

An Automated Teller Machine (ATM) is an electronic banking device that allows customers to perform financial transactions, such as withdrawing cash, checking account balances, and making deposits, without the need for a human bank teller. ATMs are typically connected to financial networks and are commonly located at bank branches, shopping centers, and other convenient public locations to provide easy access to banking services.

### SUMMARY

In various examples, methods and systems for securing a gear or a pulley to a shaft in a media conveyance device of an automated teller machine (ATM) are presented.

According to an example, a system includes a shaft having at least one tapered surface, and a gear or pulley having at least one complementary tapered surface on an internal bore, the at least one complementary tapered surface configured to interface with the at least one tapered surface of the shaft. The system may include a bowed retaining clip, which when engaged with a portion of the shaft, secures the gear or the pulley to the shaft.

According to a first aspect of the present invention there is provided a system comprising:
a metal shaft having at least one tapered surface;
a gear having at least one complementary tapered surface on an internal bore, the at least one complementary tapered surface configured to interface with the at least one tapered surface of the metal shaft when the metal shaft is inserted into the internal bore; and
a bowed retaining clip, which when engaged with a portion of the metal shaft, secures the gear to the metal shaft.

Aptly, wherein the gear is injection molded.

Aptly, wherein the metal shaft is a monolithically manufactured steel shaft.

Aptly, wherein the portion of the metal shaft has a first diameter, wherein the metal shaft includes a second portion distal from the portion, the second portion having a second diameter larger than the first diameter, and wherein the metal shaft includes a third portion distal from the second portion having a third diameter larger than the first diameter, a face of the third portion in engageable with a face of the bowed retaining clip.

Aptly, wherein the metal shaft is insertable into the internal bore of the gear along an axis, and wherein the bowed retaining clip is compressible along the axis.

Aptly, wherein the bowed retaining clip is configured to be compressed when the internal bore of the gear is manufactured to have a smaller diameter than a tolerance threshold.

Aptly, wherein the bowed retaining clip is configured to maintain a compressive force on the gear when the internal bore of the gear is manufactured to have a larger diameter than a tolerance threshold.

Aptly, wherein a face of the bowed retaining clip is engageable with a face of the gear.

Aptly, wherein the system is a system for conveying media in an automated teller machine.

Aptly, wherein the system further comprises at least one belt affixed around the metal shaft for conveying media.

Aptly, wherein the metal shaft has a plurality of tapered surfaces including the at least one tapered surface and wherein the gear has a complementary plurality of tapered surfaces including the at least one complementary tapered surface.

Aptly, wherein when the gear is driven, the metal shaft is configured to rotate based on a torque applied at the at least one tapered surface by the at least one complementary tapered surface.

According to a second aspect of the present invention there is provided a media conveyance device comprising:
a shaft having at least one tapered surface;
a plastic pulley having at least one complementary tapered surface on an internal bore, the at least one complementary tapered surface configured to interface with the at least one tapered surface of the shaft when the shaft is inserted into the internal bore; and
a bowed retaining clip, which when engaged with a portion of the shaft, secures the plastic pulley to the shaft.

Aptly, wherein the shaft is insertable into the internal bore of the plastic pulley along an axis, and wherein the bowed retaining clip is compressible along the axis.

Aptly, wherein the bowed retaining clip is configured to be compressed when the internal bore of the plastic pulley is manufactured to have a smaller diameter than a tolerance threshold.

Aptly, wherein the bowed retaining clip is configured to maintain a compressive force on the plastic pulley when the internal bore of the plastic pulley is manufactured to have a larger diameter than a tolerance threshold.

According to a third aspect of the present invention there is provided an automated teller machine (ATM) comprising:
a steel shaft including:
   a first portion having a first diameter and a plurality of tapered surfaces at a distal end of the first portion;
   a second portion having a second diameter smaller than the first diameter, the second portion being distal to the first portion along the steel shaft; and
   a third portion having a third diameter larger than the second diameter at a distal end of the steel shaft;
a plastic gear having a plurality of complementary tapered surfaces on an internal bore, the plurality of complementary tapered surfaces configured to interface with respective ones of the plurality of tapered surfaces of the steel shaft when the steel shaft is inserted into the internal bore; and
a bowed retaining clip, which when engaged with the second portion of the steel shaft, secures the plastic gear to the steel shaft by compression between a proximal face of the third portion and a distal face of the plastic gear.

Aptly, wherein the steel shaft is insertable into the internal bore of the plastic gear along an axis, and wherein the bowed retaining clip is compressible along the axis.

Aptly, wherein the bowed retaining clip is configured to be compressed when the internal bore of the plastic gear is manufactured to have a smaller diameter than a tolerance threshold.

Aptly, wherein the bowed retaining clip is configured to maintain a compressive force on the plastic gear when the internal bore of the plastic gear is manufactured to have a larger diameter than a tolerance threshold.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various examples discussed in the present document.
FIG. 1 illustrates an isometric view of a media conveyance device in accordance with some examples.
FIG. 2 illustrates an exploded view of the media conveyance device in accordance with some examples.
FIG. 3A illustrates a partially sliced side view of a portion of the media conveyance device in accordance with some examples.
FIG. 3B illustrates a side view of a portion of the media conveyance device in accordance with some examples.
FIG. 4 illustrates a partially exploded view of a portion of the media conveyance device in accordance with some examples.
FIG. 5 illustrates generally a flowchart showing a technique for securing a gear or a pulley to a shaft in a media conveyance device of an ATM in accordance with some examples.
FIG. 6 illustrates generally an example of a block diagram of a machine upon which any one or more of the techniques discussed herein may perform in accordance with some examples.

### DETAILED DESCRIPTION

The systems and techniques described herein secure a gear or a pulley to a shaft in a media conveyance device of an automated teller machine (ATM). The gear or pulley may be made of plastic, with the potential for varying tolerances. In some examples, tolerance changes may cause a lack of grip with the shaft, resulting in an unusable or defective gear or pulley.

It is difficult to achieve a good assembly fit between the bore of an injection molded pulley or gear and a shaft, due to the relatively large dimensional tolerances associated with the injection molding process. When the bore is too large, the assembly is loose and may not function properly due to excessive free play between the components. When the bore is too small, assembly of the pulley or gear with the shaft may not be able to be completed by hand. Several rounds of trial fits and tooling modifications are often required before the required fit is achieved when developing a new part. The delays associated with this trial and error approach may run into months, and the extra costs may run into the thousands of dollars. Where a secure fit is required, more complex assembly methods, such as pressing, gluing or grub screws are used. These methods are slow and have negative impacts on the yield of the assembly line.

The systems and techniques described herein provide a solution to the tolerance issues associated with a pulley and shaft or gear and shaft assembly. Development time is saved by these systems and techniques due to elimination of repeated trial fits and tooling modifications. The assembly is secure, without play or with only limited play in any direction, which results in an improvement to machine function and reliability by removing backlash and shock-loading from the parent mechanism. The assembly method is as quick or quicker than existing methods.

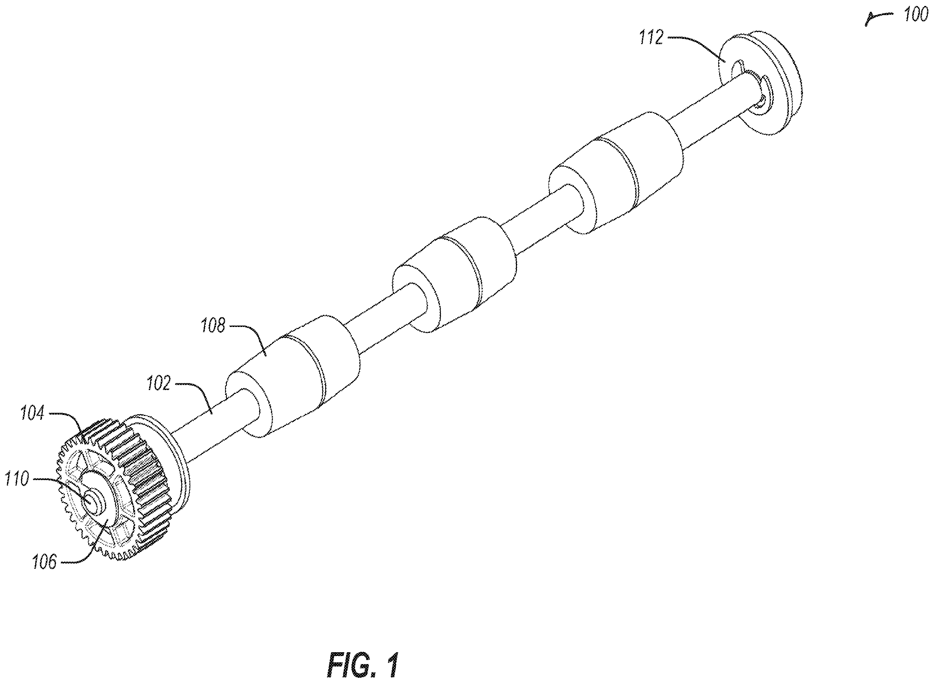

FIG. 1 illustrates an isometric view of a media conveyance device 100 in accordance with some examples.

The media conveyance device 100 includes a shaft 102 that that includes a proximal end 112 and a distal end 110 (labeled as such for convenience). The shaft 102 may provide a rotational axis for the media conveyance device 100. The media conveyance device 100 includes a gear 104 (which may be substituted for a pulley, in some examples). The gear 104 engages with the shaft 102 to cause the shaft 102 to rotate when the gear 104 is rotated (e.g., by a motor, not shown). The gear 104 may transfer rotational motion from a motor to the shaft 102. The media conveyance device 100 includes a bowed retaining clip 106 which secures the gear 104 to the shaft 102. The shaft 102 includes at least one tapered flat surface (discussed further below). The gear 104 includes at least one corresponding tapered flat surface on an internal bore. When the gear 104 is manufactured to have a larger inner average radius than a threshold or a range, the bowed retaining clip 106 is configured to maintain a compressive force on the gear 104. In an example, the bowed retaining clip 106 is a bowed retaining ring (e.g. EL series External Bowed Locking Ring manufactured by Rotor Clip). The gear 104 may be assembled on the shaft 102 by hand with the retaining ring installed using an appropriate hand tool. The shaft 102 may be a monolithically manufactured shaft, such as a monolithically manufactured steel shaft. In other examples, the shaft 102 may include two or more components (e.g., the distal end 110 or the proximal end 112 may be affixed, such as screwed onto the shaft 102). The shaft 102 may be a steel shaft.

The media conveyance device 100 is configured to fit the gear 104 to the shaft 102 securely without requiring fine dimensional control of the gear 104. For example, the gear 104 may be inserted on the shaft (e.g., at the distal end 110), and aligned to the at least one tapered surface of the shaft 102. The clip may be attached to the shaft 102 (e.g., around the shaft) between the gear 104 and the distal end 110. In some examples, rotational, axial, or radial play are eliminated by the bowed retaining clip 106 pushing the tapered surfaces of the shaft 102 and the gear 104 together. The distal end 110 of the shaft 102 may include a knob or other engagement mechanism that has a radius larger than a radius of the shaft 102 that the bowed retaining clip 106 is secured to. The distal end 110 may apply pressure on the bowed retaining clip 106, which may compress or apply pressure to the gear 104. The media conveyance device 100 includes one or more belts (e.g., belt 108), which are rotated when the shaft 102 rotates. The belt 108 may be used to convey media (e.g., notes, paper, etc.) such as within an automated teller machine (ATM).

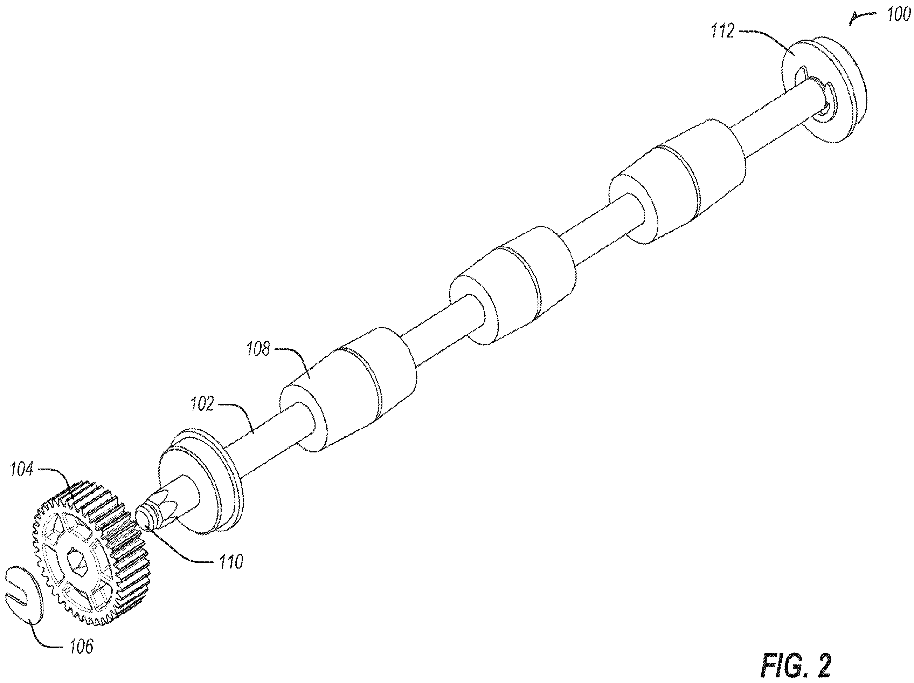

FIG. 2 illustrates an exploded view of the media conveyance device 200 in accordance with some examples. In the exploded view of the media conveyance device 200, the distal end 110 of the shaft 102 is visible with a larger radius than a portion of the shaft 102 that the bowed retaining clip 106 is fixable to.

The bowed retaining clip 106 may be mechanically attached to the shaft 102 without being fixed to the gear 104. The bowed retaining clip 106 may be attached to the shaft 102 without being locked, glued, or permanently affixed to the shaft 102 (e.g., the bowed retaining clip 106 may be removable from the shaft 102 by a human). The bowed retaining clip 106 may apply a force on the gear 104 axially along a central axis of the shaft 102 (e.g., and the gear 104).

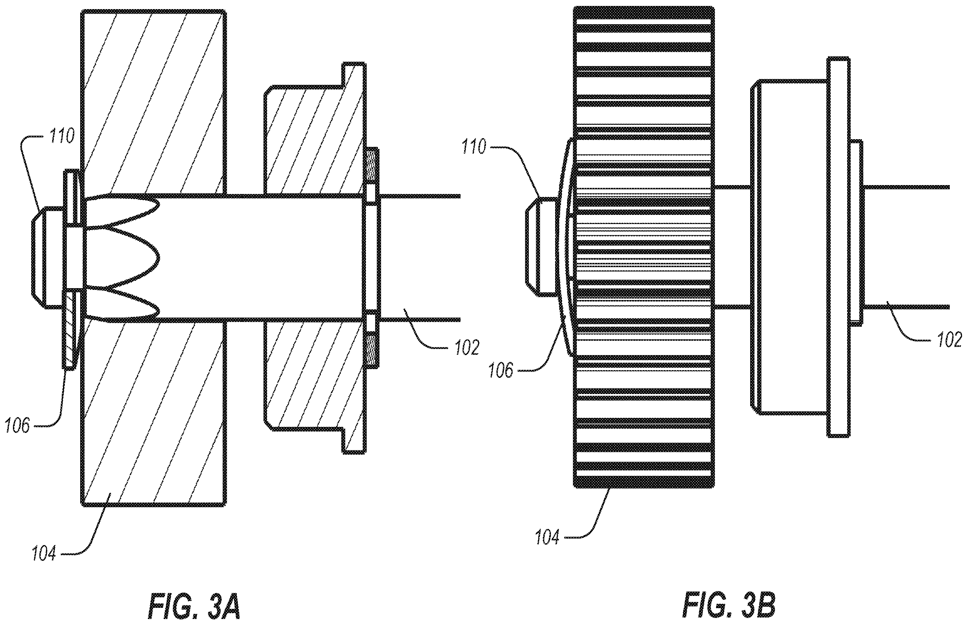

FIG. 3A illustrates a partially sliced side view of a portion of the media conveyance device 100 in accordance with some examples. The partially sliced side view illustrates the gear 104 and a portion of the shaft sliced, but retains the main portion of the shaft 102 in full to illustrate how the bowed retaining clip 106 interacts with the distal end 110 of the shaft and the gear 104.

FIG. 3B illustrates a side view of a portion of the media conveyance device 100 in accordance with some examples. The side view of FIG. 3B shows the bowed retaining clip 106 in a bowed state with force applied on the bowed retaining clip 106 by the distal end 110 of the shaft 102 and force applied by the bowed retaining clip 106 on the gear 104 by the edges of the bowed retaining clip 106. FIG. 3A shows the bowed retaining clip 106 compressed by the gear 104 and the distal end 110 of the shaft 102. The example in FIG. 3A illustrates a state where the gear 104 is manufactured to have an internal diameter that is smaller than a first tolerance. The example in FIG. 3A illustrates a state where the gear 104 is manufactured to have an internal diameter that is larger than a second tolerance. In an example, the second tolerance is larger than the first tolerance. In some examples, the first tolerance is an external diameter of the shaft 102 or within a few tenths or hundredths of millimeters. In some examples, the first tolerance and the second tolerance are the same.

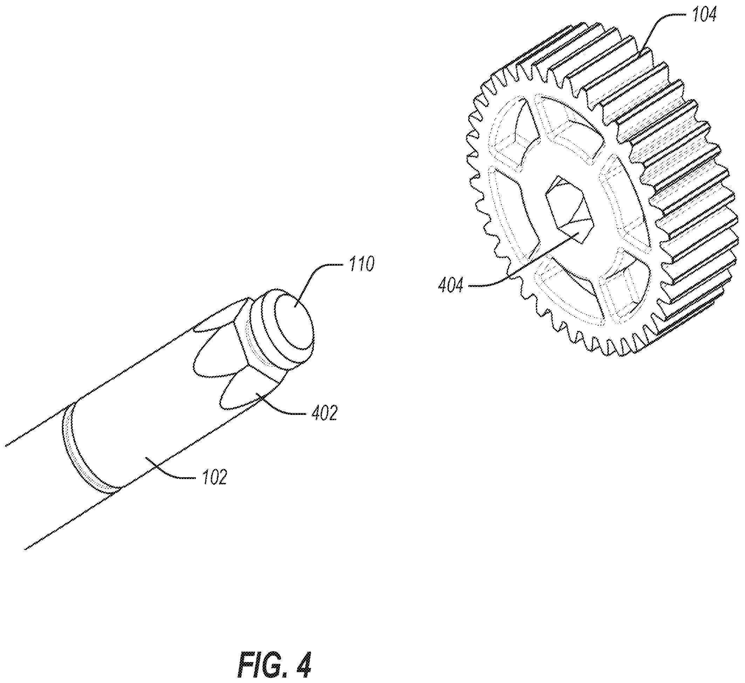

FIG. 4 illustrates a partially exploded view of a portion of the media conveyance device in accordance with some examples. The partially exploded view in FIG. 4 illustrates a tapered flat surface 402 on the shaft 102 (e.g., among a plurality of tapered flat surfaces). The gear 104 includes a corresponding tapered flat surface 404 (e.g., among a plurality of corresponding tapered flat surfaces). The tapered flat surface 402 may interface with the corresponding tapered flat surface 404 to engage the gear 104 with the shaft 102. The gear 104 may have a torque applied by a motor (not shown) to turn the gear 104. When the gear turns, the corresponding tapered flat surface 404 may engage with the tapered flat surface 402 to cause the shaft 102 to turn. The distal end 110 of the shaft 102 is shown, which may include a diameter smaller than a smallest internal diameter of the gear 104 such that the gear 104 may be inserted past the distal end 110.

When the corresponding tapered flat surface 404 inside the gear 104 is too large compared to the tapered flat surface 402 of the shaft 102, the bowed retaining clip 106 may apply a compressive force. When the corresponding tapered flat surface 404 inside the gear is too small compared to the tapered flat surface 402 of the shaft 102, the bowed retaining clip 106 may be compressed by the gear 104. In an example, when the corresponding tapered flat surface 404 inside the gear is too small compared to the tapered flat surface 402 of the shaft 102, the bowed retaining clip 106 may be inserted onto the shaft 102 by hand, compressing the gear 104 such that the assembly may be completed by a user by hand.

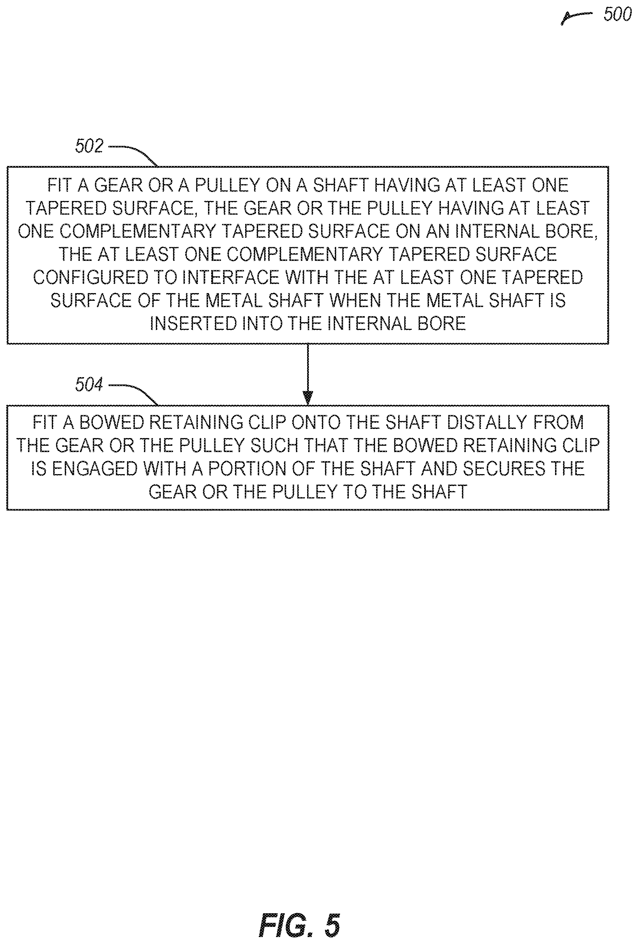

FIG. 5 illustrates generally a flowchart showing a technique 500 for securing a gear to a shaft in a media conveyance device of an ATM in accordance with some examples.

The technique 500 includes an operation 502 to fit a gear or a pulley on a shaft having at least one tapered surface, the gear or the pulley having at least one complementary tapered surface on an internal bore, the at least one complementary tapered surface configured to interface with the at least one tapered surface of the metal shaft when the metal shaft is inserted into the internal bore. The shaft may be made of metal, such as steel. The shaft may be a monolithically manufactured steel shaft. The gear or the pulley may be injection molded.

The technique 500 includes an operation 504 to fit a bowed retaining clip onto the shaft distally from the gear or the pulley such that the bowed retaining clip is engaged with a portion of the shaft and secures the gear or the pulley to the shaft. In an example, the metal shaft is insertable into the internal bore of the gear along an axis, and wherein the bowed retaining clip is compressible along the axis. In an example, the bowed retaining clip is configured to be compressed when the internal bore of the gear is manufactured to have a smaller diameter than a tolerance threshold. The bowed retaining clip may be configured to maintain a compressive force on the gear when the internal bore of the gear is manufactured to have a larger diameter than a tolerance threshold. In an example, a face of the bowed retaining clip is engageable with a face of the gear. In an example, at least one belt is affixed around the shaft for conveying media. The shaft may have a plurality of tapered surfaces including the at least one tapered surface and the gear or the pulley may have a complementary plurality of tapered surfaces including the at least one complementary tapered surface. When the gear is driven, the shaft may be configured to rotate based on a torque applied at the at least one tapered surface by the at least one complementary tapered surface. In an example, the portion of the shaft has a first diameter and the shaft includes a second portion distal from the portion, the second portion having a second diameter larger than the first diameter. In this example, the shaft may include a third portion distal from the second portion having a third diameter larger than the first diameter, where a face of the third portion in engageable with a face of the bowed retaining clip.

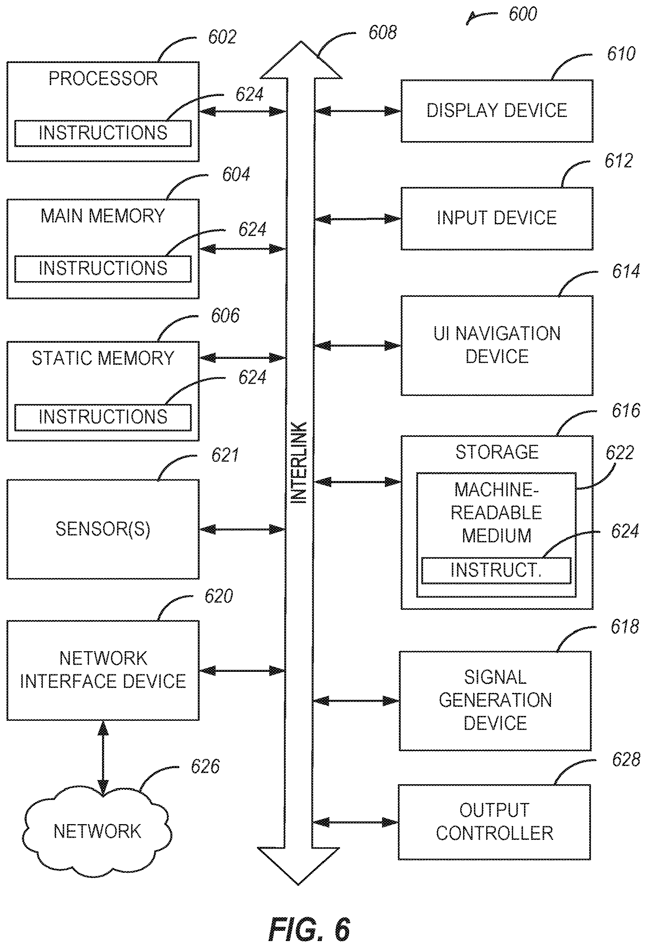

FIG. 6 illustrates generally an example of a block diagram of a machine upon which any one or more of the techniques discussed herein may perform, according to various examples. In alternative embodiments, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a peer machine in peer-to-peer (P2P) (or other distributed) network environment. The machine 600 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In an example, the hardware may include configurable execution units (e.g., transistors, circuits, etc.) and a computer readable medium containing instructions, where the instructions configure the execution units to carry out a specific operation when in operation. The configuring may occur under the direction of the execution units or a loading mechanism. Accordingly, the execution units are communicatively coupled to the computer readable medium when the device is operating. In this example, the execution units may be a member of more than one module. For example, under operation, the execution units may be configured by a first set of instructions to implement a first module at one point in time and reconfigured by a second set of instructions to implement a second module.

Machine (e.g., computer system) 600 may include a hardware processor 602 (e.g., a central processing unit (CPU), a graphics processing unit (GPU), a hardware processor core, or any combination thereof), a main memory 604 and a static memory 606, some or all of which may communicate with each other via an interlink (e.g., bus) 608. The machine 600 may further include a display unit 610, an alphanumeric input device 612 (e.g., a keyboard), and a user interface (UI) navigation device 614 (e.g., a mouse). In an example, the display unit 610, alphanumeric input device 612 and UI navigation device 614 may be a touch screen display. The machine 600 may additionally include a storage device (e.g., drive unit) 616, a signal generation device 618 (e.g., a speaker), a network interface device 620, and one or more sensors 621, such as a global positioning system (GPS) sensor, compass, accelerometer, or other sensor. The machine 600 may include an output controller 628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 616 may include a machine readable medium 622 that is non-transitory on which is stored one or more sets of data structures or instructions 624 (e.g., software) embodying or utilized by any one or more of the techniques or functions described herein. The instructions 624 may also reside, completely or at least partially, within the main memory 604, within static memory 606, or within the hardware processor 602 during execution thereof by the machine 600. In an example, one or any combination of the hardware processor 602, the main memory 604, the static memory 606, or the storage device 616 may constitute machine readable media.

While the machine readable medium 622 is illustrated as a single medium, the term "machine readable medium" may include a single medium or multiple media (e.g., a centralized or distributed database, or associated caches and servers) configured to store the one or more instructions 624.

The term "machine readable medium" may include any medium that is capable of storing, encoding, or carrying instructions for execution by the machine 600 and that cause the machine 600 to perform any one or more of the techniques of the present disclosure, or that is capable of storing, encoding, or carrying data structures used by or associated with such instructions. Non-limiting machine-readable medium examples may include solid-state memories, and optical and magnetic media. Specific examples of machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 624 may further be transmitted or received over a communications network 626 using a transmission medium via the network interface device 620 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 620 may include one or more physical jacks (e.g., Ethernet, coaxial, or phone jacks) or one or more antennas to connect to the communications network 626. In an example, the network interface device 620 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 600, and includes digital or analog communications signals or other intangible medium to facilitate communication of such software.

Each of these non-limiting examples may stand on its own, or may be combined in various permutations or combinations with one or more of the other examples.

Example 1 is a system comprising: a metal shaft having at least one tapered surface; a gear having at least one complementary tapered surface on an internal bore, the at least one complementary tapered surface configured to interface with the at least one tapered surface of the metal shaft when the metal shaft is inserted into the internal bore; and a bowed retaining clip, which when engaged with a portion of the metal shaft, secures the gear to the metal shaft.

In Example 2, the subject matter of Example 1 includes, wherein the gear is injection molded.

In Example 3, the subject matter of Examples 1-2 includes, wherein the metal shaft is a monolithically manufactured steel shaft.

In Example 4, the subject matter of Examples 1-3 includes, wherein the portion of the metal shaft has a first diameter, wherein the metal shaft includes a second portion distal from the portion, the second portion having a second diameter larger than the first diameter, and wherein the metal shaft includes a third portion distal from the second portion having a third diameter larger than the first diameter, a face of the third portion in engageable with a face of the bowed retaining clip.

In Example 5, the subject matter of Examples 1-4 includes, wherein the metal shaft is insertable into the internal bore of the gear along an axis, and wherein the bowed retaining clip is compressible along the axis.

In Example 6, the subject matter of Examples 1-5 includes, wherein the bowed retaining clip is configured to be compressed when the internal bore of the gear is manufactured to have a smaller diameter than a tolerance threshold.

In Example 7, the subject matter of Examples 1-6 includes, wherein the bowed retaining clip is configured to maintain a compressive force on the gear when the internal bore of the gear is manufactured to have a larger diameter than a tolerance threshold.

In Example 8, the subject matter of Examples 1-7 includes, wherein a face of the bowed retaining clip is engageable with a face of the gear.

In Example 9, the subject matter of Examples 1-8 includes, wherein the system is a system for conveying media in an automated teller machine.

In Example 10, the subject matter of Examples 1-9 includes, wherein the system further comprises at least one belt affixed around the metal shaft for conveying media.

In Example 11, the subject matter of Examples 1-10 includes, wherein the metal shaft has a plurality of tapered surfaces including the at least one tapered surface and wherein the gear has a complementary plurality of tapered surfaces including the at least one complementary tapered surface.

In Example 12, the subject matter of Examples 1-11 includes, wherein when the gear is driven, the metal shaft is configured to rotate based on a torque applied at the at least one tapered surface by the at least one complementary tapered surface.

Example 13 is a media conveyance device comprising: a shaft having at least one tapered surface; a plastic pulley having at least one complementary tapered surface on an internal bore, the at least one complementary tapered surface configured to interface with the at least one tapered surface of the shaft when the shaft is inserted into the internal bore; and a bowed retaining clip, which when engaged with a portion of the shaft, secures the plastic pulley to the shaft.

In Example 14, the subject matter of Example 13 includes, wherein the shaft is insertable into the internal bore of the plastic pulley along an axis, and wherein the bowed retaining clip is compressible along the axis.

In Example 15, the subject matter of Examples 13-14 includes, wherein the bowed retaining clip is configured to be compressed when the internal bore of the plastic pulley is manufactured to have a smaller diameter than a tolerance threshold.

In Example 16, the subject matter of Examples 13-15 includes, wherein the bowed retaining clip is configured to maintain a compressive force on the plastic pulley when the internal bore of the plastic pulley is manufactured to have a larger diameter than a tolerance threshold.

Example 17 is an automated teller machine (ATM) comprising: a steel shaft including: a first portion having a first diameter and a plurality of tapered surfaces at a distal end of the first portion; a second portion having a second diameter smaller than the first diameter, the second portion being distal to the first portion along the steel shaft; and a third portion having a third diameter larger than the second diameter at a distal end of the steel shaft; a plastic gear having a plurality of complementary tapered surfaces on an internal bore, the plurality of complementary tapered surfaces configured to interface with respective ones of the plurality of tapered surfaces of the steel shaft when the steel shaft is inserted into the internal bore; and a bowed retaining clip, which when engaged with the second portion of the steel shaft, secures the plastic gear to the steel shaft by compression between a proximal face of the third portion and a distal face of the plastic gear.

In Example 18, the subject matter of Example 17 includes, wherein the steel shaft is insertable into the internal bore of the plastic gear along an axis, and wherein the bowed retaining clip is compressible along the axis.

In Example 19, the subject matter of Examples 17-18 includes, wherein the bowed retaining clip is configured to be compressed when the internal bore of the plastic gear is manufactured to have a smaller diameter than a tolerance threshold.

In Example 20, the subject matter of Examples 17-19 includes, wherein the bowed retaining clip is configured to maintain a compressive force on the plastic gear when the internal bore of the plastic gear is manufactured to have a larger diameter than a tolerance threshold.

Example 21 is a method comprising: fitting a gear or a pulley on a shaft having at least one tapered surface, the gear or the pulley having at least one complementary tapered surface on an internal bore, the at least one complementary tapered surface configured to interface with the at least one tapered surface of the metal shaft when the metal shaft is inserted into the internal bore; and fitting a bowed retaining clip onto the shaft distally from the gear or the pulley such that the bowed retaining clip is engaged with a portion of the shaft and secures the gear or the pulley to the shaft.

Example 22 is at least one machine-readable medium including instructions that, when executed by processing circuitry, cause the processing circuitry to perform operations to implement of any of Examples 1-21.

Example 23 is an apparatus comprising means to implement of any of Examples 1-21.

Example 24 is a system to implement of any of Examples 1-21.

Example 25 is a method to implement of any of Examples 1-21.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A system comprising:
a metal shaft having at least one tapered surface;
a gear having at least one complementary tapered surface on an internal bore, the at least one complementary tapered surface configured to interface with the at least one tapered surface of the metal shaft when the metal shaft is inserted into the internal bore; and
a bowed retaining clip, which when engaged with a portion of the metal shaft, secures the gear to the metal shaft.

2. The system of claim 1, wherein the gear is injection molded.

3. The system of claim 1 or claim 2, wherein the metal shaft is a monolithically manufactured steel shaft.

4. The system of any preceding claim, wherein the portion of the metal shaft has a first diameter, wherein the metal shaft includes a second portion distal from the portion, the second portion having a second diameter larger than the first diameter, and wherein the metal shaft includes a third portion distal from the second portion having a third diameter larger than the first diameter, a face of the third portion in engageable with a face of the bowed retaining clip; and/or
wherein the metal shaft is insertable into the internal bore of the gear along an axis, and wherein the bowed retaining clip is compressible along the axis.

5. The system of any preceding claim, wherein the bowed retaining clip is configured to be compressed when the internal bore of the gear is manufactured to have a smaller diameter than a tolerance threshold; and/or
wherein the bowed retaining clip is configured to maintain a compressive force on the gear when the internal bore of the gear is manufactured to have a larger diameter than a tolerance threshold; and/or
wherein a face of the bowed retaining clip is engageable with a face of the gear.

6. The system of any preceding claim, wherein the system is a system for conveying media in an automated teller machine; and/or
wherein the system further comprises at least one belt affixed around the metal shaft for conveying media.

7. The system of any preceding claim, wherein the metal shaft has a plurality of tapered surfaces including the at least one tapered surface and wherein the gear has a complementary plurality of tapered surfaces including the at least one complementary tapered surface; and/or
wherein when the gear is driven, the metal shaft is configured to rotate based on a torque applied at the at least one tapered surface by the at least one complementary tapered surface.

8. A media conveyance device comprising:
a shaft having at least one tapered surface;
a plastic pulley having at least one complementary tapered surface on an internal bore, the at least one complementary tapered surface configured to interface with the at least one tapered surface of the shaft when the shaft is inserted into the internal bore; and
a bowed retaining clip, which when engaged with a portion of the shaft, secures the plastic pulley to the shaft.

9. The media conveyance device of claim 8, wherein the shaft is insertable into the internal bore of the plastic pulley along an axis, and wherein the bowed retaining clip is compressible along the axis.

10. The media conveyance device of claim 8 or claim 9, wherein the bowed retaining clip is configured to be compressed when the internal bore of the plastic pulley is manufactured to have a smaller diameter than a tolerance threshold.

11. The media conveyance device of any one of claims 8 to 10, wherein the bowed retaining clip is configured to maintain a compressive force on the plastic pulley when the internal bore of the plastic pulley is manufactured to have a larger diameter than a tolerance threshold.

12. An automated teller machine (ATM) comprising:
a steel shaft including:
a first portion having a first diameter and a plurality of tapered surfaces at a distal end of the first portion;
a second portion having a second diameter smaller than the first diameter, the second portion being distal to the first portion along the steel shaft; and
a third portion having a third diameter larger than the second diameter at a distal end of the steel shaft;
a plastic gear having a plurality of complementary tapered surfaces on an internal bore, the plurality of complementary tapered surfaces configured to interface with respective ones of the plurality of tapered surfaces of the steel shaft when the steel shaft is inserted into the internal bore; and
a bowed retaining clip, which when engaged with the second portion of the steel shaft, secures the plastic gear to the steel shaft by compression between a proximal face of the third portion and a distal face of the plastic gear.

13. The ATM of claim 12, wherein the steel shaft is insertable into the internal bore of the plastic gear along an axis, and wherein the bowed retaining clip is compressible along the axis.

14. The ATM of claim 12 or claim 13, wherein the bowed retaining clip is configured to be compressed when the internal bore of the plastic gear is manufactured to have a smaller diameter than a tolerance threshold.

15. The ATM of any one of claims 12 to 14, wherein the bowed retaining clip is configured to maintain a compressive force on the plastic gear when the internal bore of the plastic gear is manufactured to have a larger diameter than a tolerance threshold.
